# EUROPEAN PATENT APPLICATION

(11) **EP 3 839 775 A1**
(43) Date of publication of application: **23.06.2021**
(21) Application number: 20196733.8
(22) Date of filing: 17.09.2020
(51) Int. Cl.: G06F 21/32, H04L 9/32, H04L 29/06, G06K 9/00

(54) **METHODS AND SYSTEMS FOR DISPLAYING A VISUAL AID WHILE CAPTURING USER IMAGE**

(30) Priority: 17.12.2019 US 201916716958
(71) Applicant: Daon Holdings Limited, George Town Grand Cayman (KY)
(72) Inventor: IONITA, Mircea, Dublin, D2 (IE)
(74) Representative: Hanna Moore + Curley

(57) **Abstract**

A method for displaying a visual aid is provided that includes calculating a distortion score based on an initial position of a computing device and comparing, by the computing device, the distortion score against a threshold distortion value. When the distortion score is less than or equal to the threshold distortion value, a visual aid is displayed having a first size and when the distortion score exceeds the threshold distortion value the visual aid is displayed at a second size.

## Description

### BACKGROUND OF THE INVENTION

This invention relates generally to capturing user image data, and more particularly, to methods and systems for displaying a visual aid while capturing user image data.

Users conduct transactions with many different service providers in person and remotely over the Internet. Network-based transactions conducted over the Internet may involve purchasing items from a merchant website or accessing confidential information from a website. Service providers that own and operate such websites typically require successfully identifying users before allowing a desired transaction to be conducted.

Users are increasingly using smart devices to conduct such network-based transactions and to conduct network-based biometric authentication transactions. Some network-based biometric authentication transactions have more complex biometric data capture requirements which have been known to be more difficult for users to comply with. For example, some users have been known to position the smart device near their waist when capturing a facial image. Many users still look downwards even if the device is held somewhere above waist level. Such users typically do not appreciate that differently positioning the smart device should result in capturing better image data. Consequently, capturing image data of a biometric modality of such users that can be used for generating trustworthy authentication transaction results has been known to be difficult, annoying, and time consuming for users and authentication service providers. Additionally, capturing such image data has been known to increase costs for authentication service providers.

### BRIEF DESCRIPTION OF THE INVENTION

In one aspect, a method for displaying a visual aid that includes calculating a distortion score based on an initial position of a computing device, and comparing, by the computing device, the distortion score against a threshold distortion value. When the distortion score is less than or equal to the threshold distortion value, a visual aid having a first size is displayed and when the distortion score exceeds the threshold distortion value the visual aid is displayed at a second size.

In another aspect, a computing device for displaying a visual aid is provided that includes a processor and a memory configured to store data. The computing device is associated with a network and the memory is in communication with the processor and has instructions stored thereon which, when read and executed by the processor, cause the computing device to calculate a distortion score based on an initial position of the computing device and compare the distortion score against a threshold distortion value. When the distortion score is less than or equal to the threshold distortion value a visual aid having a first size is displayed and when the distortion score exceeds the threshold distortion value the visual aid is displayed at a second size.

In yet another aspect, a method for displaying a visual aid is provided that includes establishing limits for a change in image data distortion. The method also includes calculating a distance ratio for each limit, calculating a width of a visual aid based on the maximum distance ratio, and displaying the visual aid.

### BRIEF DESCRIPTION OF THE DRAWINGS

Figure 1 is a diagram of an example computing device used for displaying a visual aid;
Figure 2 is a side view of a person operating the computing device in which the computing device is in an example initial position;
Figure 3 is an enlarged front view of the computing device displaying a facial image of the user when the computing device is in the initial position;
Figure 4 is an enlarged front view of the computing device as shown in Figure 3, further displaying a first example visual aid;
Figure 5 is a side view of the user operating the computing device in which the computing device is in a first example terminal position;
Figure 6 is an enlarged front view of the computing device in the first terminal position displaying the facial image approximately aligned with the first visual aid;
Figure 7 is an enlarged front view of the computing device as shown in Figure 6; however, the facial image and visual aid are larger;
Figure 8 is an enlarged front view of the computing device displaying the first visual aid as shown in Figure 7;
Figure 9 is a side view of the user operating the computing device in which the computing device is in a second example initial position;
Figure 10 is an enlarged front view of the computing device displaying the facial image of the user when the computing device is in the second example initial position;
Figure 11 is an enlarged front view of the computing device displaying the facial image and a second example visual aid;
Figure 12 is a side view of the user operating the computing device in a second example terminal position;
Figure 13 is an enlarged front view of the computing device in the second example terminal position displaying the facial image approximately aligned with the second visual aid;
Figure 14 is an example curve illustrating the rate of change in the distortion of biometric characteristics included in captured facial image data;
Figure 15 is the example curve as shown in Figure 14 further including an example change in distortion;
Figure 16 is the example curve as shown in Figure 15; however, the initial position of the computing device is different;
Figure 17 is the example curve as shown in Figure 15; however, the terminal position is not coincident with the position of a threshold distortion value;
Figure 18 is the example curve as shown in Figure 17; however, the change in distortion occurs between different limits;
Figure 19 is the example curve as shown in Figure 18; however, the change in distortion occurs between different limits;
Figure 20 is the example curve as shown in Figure 19; however, the change in distortion occurs between different limits;
Figure 21 is a flowchart illustrating an example method of displaying a visual aid; and.
Figure 22 is a flowchart illustrating another example method of displaying a visual aid.

### DETAILED DESCRIPTION OF THE INVENTION

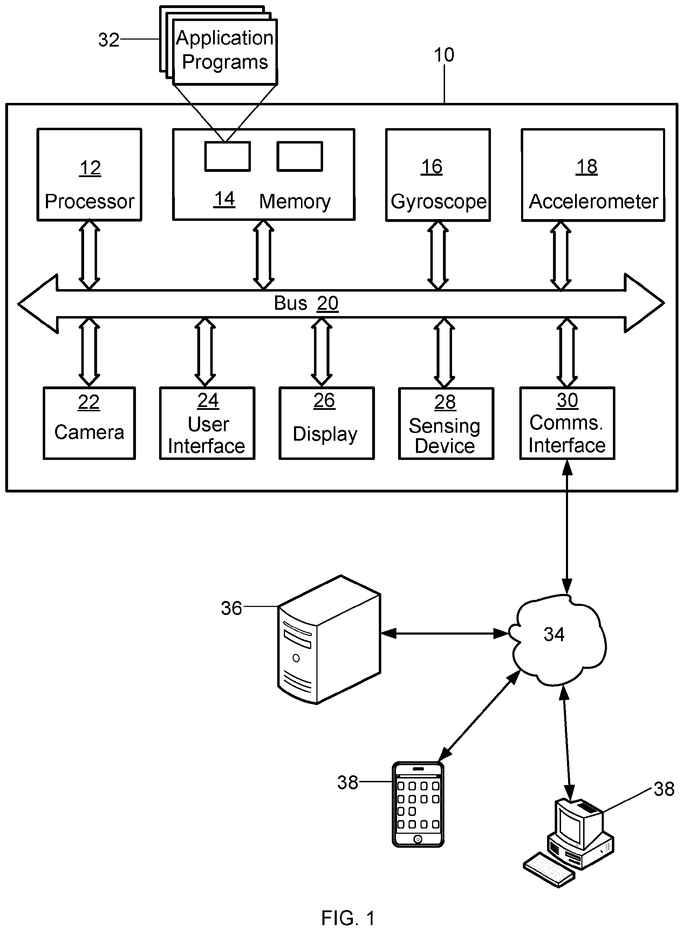

Figure 1 is a diagram of an example computing device 10 used for displaying a visual aid. The computing device 10 includes components such as, but not limited to, one or more processors 12, a memory 14, a gyroscope 16, one or more accelerometers 18, a bus 20, a camera 22, a user interface 24, a display 26, a sensing device 28, and a communications interface 30. General communication between the components in the computing device 10 is provided via the bus 20.

The computing device 10 may be any device capable of at least capturing image data, processing the captured image data, and performing at least the functions described herein. One example of the computing device 10 is a smart phone. Other examples include, but are not limited to, a cellular phone, a tablet computer, a phablet computer, a laptop computer, a personal computer (PC), and any type of device having wired or wireless networking capabilities such as a personal digital assistant (PDA).

The processor 12 executes instructions, or computer programs, stored in the memory 14. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

As used herein, the term "computer program" is intended to encompass an executable program that exists permanently or temporarily on any non-transitory computer-readable recordable medium that causes the computing device 10 to perform at least a portion of the functions and/or methods described herein. Application programs 32, also known as applications, are computer programs stored in the memory 14. Application programs 32 include, but are not limited to, an operating system, an Internet browser application, enrolment applications, authentication applications, user liveness detection applications, face tracking applications, applications that use pre-trained models based on machine learning algorithms, feature vector generator applications, and any special computer program that manages the relationship between application software and any suitable variety of hardware that helps to make-up a computer system or computing environment.

Authentication applications enable the computing device 10 to conduct user verification and identification (1:N) transactions with any type of authentication data, where "N" is a number of candidates. Machine learning algorithm applications include at least classifiers and regressors. Examples of machine learning algorithms include, but are not limited to, support vector machine learning algorithms, decision tree classifiers, linear discriminant analysis learning algorithms, and artificial neural network learning algorithms. Decision tree classifiers include, but are not limited to, random forest algorithms.

The memory 14 may be any non-transitory computer-readable recording medium used to store data including, but not limited to, computer programs and user data records. Non-transitory computer-readable recording media may be any tangible computer-based device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), an optical ROM disc, such as a CD-ROM or DVD-ROM disc, and disc drive or the like. Furthermore, the non-transitory computer-readable recording media may be implemented as smart cards, SIMs, any type of physical and/or virtual storage, or any other digital source such as a network or the Internet from which a computing device can read computer programs, applications or executable instructions.

The data records are typically for users associated with the computing device 10. The data record for each user may include biometric modality data, biometric templates and personal data of the user. Biometric modalities include, but are not limited to, voice, face, finger, iris, palm, and any combination of these or other modalities. Biometric modality data is the data of a biometric modality of a person captured by the computing device 10. As used herein, capture means to record temporarily or permanently, biometric modality data of a person. Biometric modality data may be in any form including, but not limited to, image data and audio data. Image data may be a digital image, a sequence of digital images, or a video. Each digital image is included in a frame. The biometric modality data in the data record may be processed to generate at least one biometric modality template.

The process of verifying the identity of a user is known as a verification transaction. Typically, during a verification transaction a biometric template is generated from biometric modality data of a user captured during the transaction. The generated biometric template is compared against the corresponding record biometric template of the user and a matching score is calculated for the comparison. If the matching score meets or exceeds a threshold score, the identity of the user is verified as true. Alternatively, the captured user biometric modality data may be compared against the corresponding record biometric modality data to verify the identity of the user.

An authentication data requirement is the biometric modality data desired to be captured during a verification or identification transaction. For the example methods described herein, the authentication data requirement is for the face of the user. However, the authentication data requirement may alternatively be for any biometric modality or any combination of biometric modalities.

Biometric modality data may be captured in any manner. For example, for voice biometric data the computing device 10 may record a user speaking. For face biometric data, the camera 22 may record image data of the face of a user by taking one or more photographs or digital images of the user, or by taking a video of the user. The camera 22 may record a sequence of digital images at irregular or regular intervals. A video is an example of a sequence of digital images being captured at a regular interval. Captured biometric modality data may be temporarily or permanently stored in the computing device 10 or in any device capable of communicating with the computing device 10. Alternatively, the biometric modality data may not be stored.

When a sequence of digital images is captured, the computing device 10 may extract images from the sequence and assign a time stamp to each extracted image. The rate at which the computing device 10 extracts images is the image extraction rate. An application, for example a face tracker application, may process the extracted digital images. The image processing rate is the number of images that can be processed within a unit of time. Some images may take more or less time to process so the image processing rate may be regular or irregular, and may be the same or different for each authentication transaction. The number of images processed for each authentication transaction may vary with the image processing rate. The image extraction rate may be greater than the image processing rate so some of the extracted images may not be processed. The data for a processed image may be stored in the memory 14 with other data generated by the computing device 10 for that processed image, or may be stored in any device capable of communicating with the computing device 10.

The gyroscope 16 and the one or more accelerometers 18 generate data regarding rotation and translation of the computing device 10 that may be communicated to the processor 12 and the memory 14 via the bus 20. The computing device 10 may alternatively not include the gyroscope 16 or the accelerometer 18, or may not include either.

The camera 22 captures image data. The camera 22 can be one or more imaging devices configured to record image data of at least a portion of the body of a user including any biometric modality of the user while utilizing the computing device 10. Moreover, the camera 22 is capable of recording image data under any lighting conditions including infrared light. The camera 22 may be integrated into the computing device 10 as one or more front-facing cameras and/or one or more rear facing cameras that each incorporates a sensor, for example and without limitation, a CCD or CMOS sensor. Alternatively, the camera 22 can be external to the computing device 10.

The user interface 24 and the display 26 allow interaction between a user and the computing device 10. The display 26 may include a visual display or monitor that displays information to a user. For example, the display 26 may be a Liquid Crystal Display (LCD), active matrix display, plasma display, or cathode ray tube (CRT). The user interface 24 may include a keypad, a keyboard, a mouse, an illuminator, a signal emitter, a microphone, and/or speakers.

Moreover, the user interface 24 and the display 26 may be integrated into a touch screen display. Accordingly, the display may also be used to show a graphical user interface, which can display various data and provide "forms" that include fields that allow for the entry of information by the user. Touching the screen at locations corresponding to the display of a graphical user interface allows the person to interact with the computing device 10 to enter data, change settings, control functions, etc. Consequently, when the touch screen is touched, the user interface 24 communicates this change to the processor 12, and settings can be changed or user entered information can be captured and stored in the memory 14. The display 26 may function as an illumination source to apply illumination to a biometric modality while image data for the biometric modality is captured.

For user interfaces 24 that include an illuminator, the illuminator may project visible light, infrared light or near infrared light on a biometric modality, and the camera 22 may detect reflections of the projected light off the biometric modality. The reflections may be off of any number of points on the biometric modality. The detected reflections may be communicated as reflection data to the processor 12 and the memory 14. The processor 12 may use the reflection data to create at least a three-dimensional model of the biometric modality and a sequence of two-dimensional digital images. For example, the reflections from at least thirty thousand discrete points on the biometric modality may be detected and used to create a three-dimensional model of the biometric modality. Alternatively, or additionally, the camera 22 may include the illuminator.

The sensing device 28 may include Radio Frequency Identification (RFID) components or systems for receiving information from other devices. The sensing device 28 may alternatively, or additionally, include components with Bluetooth, Near Field Communication (NFC), infrared, or other similar capabilities. The computing device 10 may alternatively not include the sensing device 28.

The communications interface 30 provides the computing device 10 with two-way data communications. Moreover, the communications interface 30 enables the computing device 10 to conduct wireless communications such as cellular telephone calls and to wirelessly access the Internet over a network 34. By way of example, the communications interface 30 may be a digital subscriber line (DSL) card or modem, an integrated services digital network (ISDN) card, a cable modem, or a telephone modem to provide a data communication connection to a corresponding type of telephone line. As another example, the communications interface 30 may be a local area network (LAN) card (e.g., for Ethemet.TM. or an Asynchronous Transfer Model (ATM) network) to provide a data communication connection to a compatible LAN. As yet another example, the communications interface 30 may be a wire or a cable connecting the computing device 10 with a LAN, or with accessories such as, but not limited to, other computing devices. Further, the communications interface 30 may include peripheral interface devices, such as a Universal Serial Bus (USB) interface, a PCMCIA (Personal Computer Memory Card International Association) interface, and the like. Thus, it should be understood the communications interface 30 may enable the computing device 10 to conduct any type of wireless or wired communications such as, but not limited to, accessing the Internet. Although the computing device 10 includes a single communications interface 30, the computing device 10 may alternatively include multiple communications interfaces 30.

The communications interface 30 also allows the exchange of information across the network 34. The exchange of information may involve the transmission of radio frequency (RF) signals through an antenna (not shown). Moreover, the exchange of information may be between the computing device 10 and any other computer systems 36 and any other computing devices 38 capable of communicating over the network 34. The computer systems 36 and the computing devices 38 typically include components similar to the components included in the computing device 10. The network 34 may be a 5G communications network. Alternatively, the network 34 may be any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 34 may also be any type of wired network or a combination of wired and wireless networks.

Examples of other computer systems 36 include computer systems of service providers such as, but not limited to, financial institutions, medical facilities, national security agencies, merchants, and authenticators. Examples of other computing devices 38 include, but are not limited to, smart phones, tablet computers, phablet computers, laptop computers, personal computers and cellular phones. The other computing devices 38 may be associated with any individual or with any type of entity including, but not limited to, commercial and non-commercial entities. The computing devices 10, 38 may alternatively be referred to as computer systems or information systems, while the computer systems 36 may alternatively be referred to as computing devices or information systems.

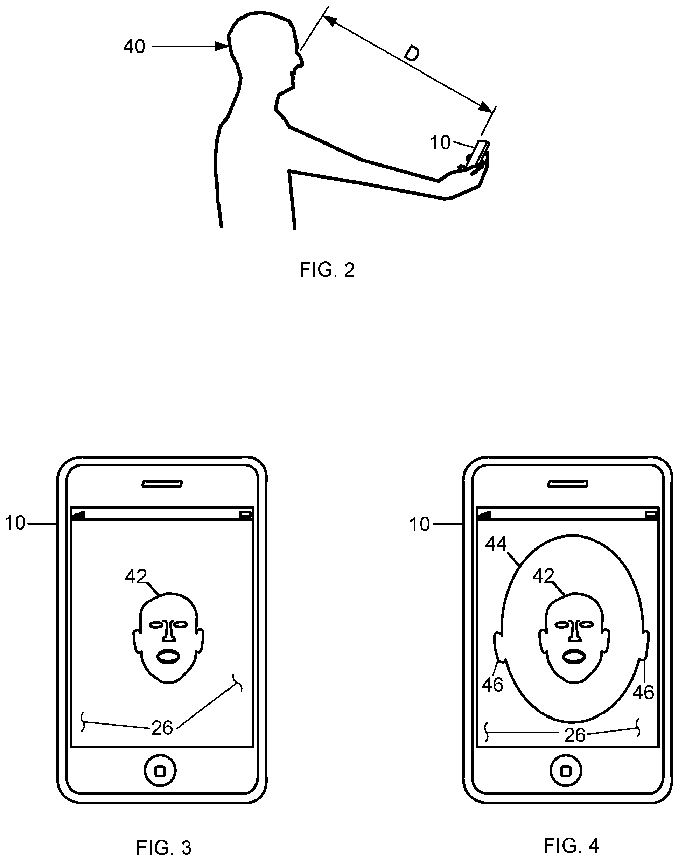

Figure 2 is a side view of a person 40 operating the computing device 10 in which the computing device 10 is in an example initial position at a distance D from the face of the person 40. The initial position is likely to be the position in which a person naturally holds the computing device 10 to begin capturing facial image data of his or her self. Because people have different natural tendencies, the initial position of the computing device 10 is typically different for different people. The person 40 from whom facial image data is captured is referred to herein as a user. The user 40 typically operates the computing device 10 while capturing image data of his or her self. However, a person different than the user 40 may operate the computing device 10 while capturing image data.

Figure 3 is an enlarged front view of the computing device 10 displaying a facial image 42 of the user 40 when the computing device 10 is in the example initial position. The size of the displayed facial image 42 increases as the distance D decreases and decreases as the distance D increases.

While in the initial position, the computing device 10 captures facial image data of the user and temporarily stores the captured image data in a buffer. Typically, the captured image data is a digital image. The captured facial image data is analyzed to calculate the center-to-center distance between the eyes which may be doubled to estimate the width of the head of the user 40. The width of a person's head is known as the bizygomatic width. Alternatively, the head width may be estimated in any manner. Additionally, the captured facial image data is analyzed to determine whether or not the entire face of the user is in the image data. When the entire face of the user is in the captured image data, the buffered image data is discarded, a visual aid is displayed, and liveness detection is conducted.

Figure 4 is an enlarged front view of the computing device 10 as shown in Figure 3, further displaying an example visual aid 44. The example visual aid 44 is an oval with ear-like indicia 46 located to correspond approximately to the ears of the user 40. Alternatively, any other type indicia may be included in the visual aid 44 that facilitates approximately aligning the displayed facial image 42 and visual aid 44. Other example shapes of the visual aid 44 include, but are not limited to, a circle, a square, a rectangle, and an outline of the biometric modality desired to be captured. The visual aid 44 may be any shape defined by lines and/or curves. Each shape may include the indicia 46. The visual aid 44 is displayed after determining the entire face of the user is in the captured image data. The visual aid 44 is displayed to encourage users to move the computing device 10 such that the facial image 42 approximately aligns with the displayed visual aid 44. Thus, the visual aid 44 functions as a guide that enables users to quickly capture facial image data usable for enhancing the accuracy of user liveness detection and generating trustworthy and accurate verification transaction results.

Most users intuitively understand that the displayed facial image 42 should approximately align with the displayed visual aid 44. As a result, upon seeing the visual aid 44 most users move the computing device 10 and/or his or her self so that the displayed facial image 42 and visual aid 44 approximately align. However, some users 40 may not readily understand the displayed facial image 42 and visual aid 44 are supposed to approximately align. Consequently, a message may additionally, or alternatively, be displayed that instructs users to approximately align the displayed facial image 42 and visual aid 44. Example messages may request the user to move closer or further away from the computing device 10, or may instruct the user to keep his or her face within the visual aid 44. Additionally, the message may be displayed at the same time as the visual aid 44 or later, and may be displayed for any period of time, for example, two seconds. Alternatively, the message may be displayed until the displayed facial image 42 and visual aid 44 approximately align. Additionally, the area of the display 26 outside the visual aid 44 may be made opaque or semi-transparent in order to enhance the area within which the displayed facial image 42 is to be arranged.

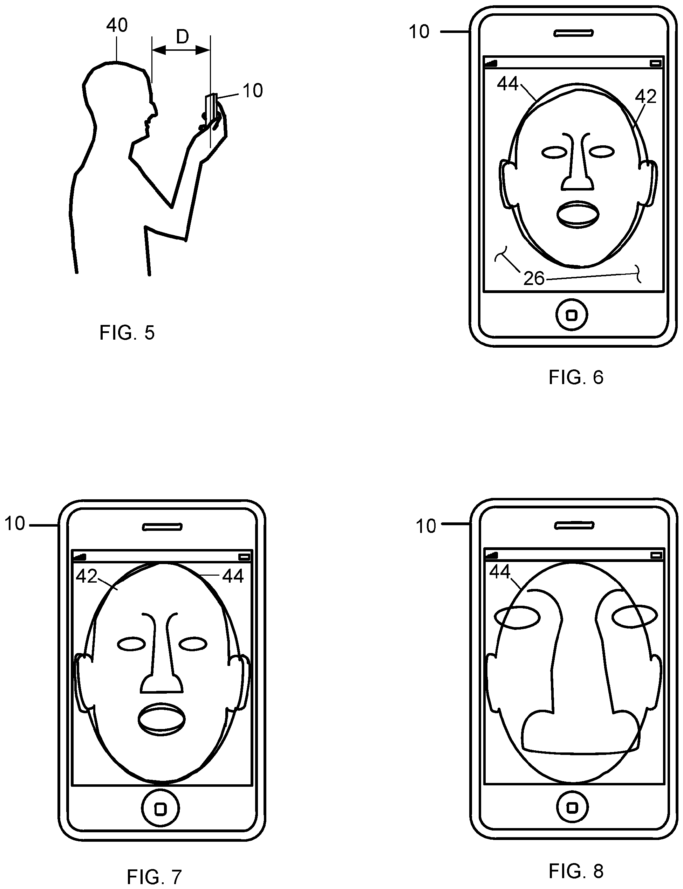

Figure 5 is a side view of the user 40 operating the computing device 10 in which the computing device 10 is in a first example terminal position. The first terminal position is closer to the user 40 so the distance D is less than that shown in Figure 2. After the visual aid 44 is displayed, typically users move the computing device 10. When the computing device 10 is moved such that the facial image 42 approximately aligns with the displayed visual aid 44, the computing device 10 is in the first terminal position.

Figure 6 is an enlarged front view of the computing device 10 in the first example terminal position displaying the facial image 42 approximately aligned with the visual aid 44. Generally, the displayed facial image 42 should be close to, but not outside, the visual aid 44 in the terminal position. However, a small percentage of the facial image 42 may be allowed to extend beyond the border. A small percentage may be between about zero and ten percent.

Users 40 may move the computing device 10 in any manner from any initial position to any terminal position. For example, the computing device 10 may be translated horizontally and/or vertically, rotated clockwise and/or counterclockwise, moved through a parabolic motion, and/or any combination thereof. Regardless of the manner of movement or path taken from an initial position to a terminal position, the displayed facial image 42 should be within the visual aid 44 during movement because the computing device 10 captures facial image data of the user 40 while the computing device 10 is moving.

The captured facial image data is temporarily stored in a buffer of the computing device 10 for liveness detection analysis. Alternatively, the captured image data may be transmitted from the computing device 10 to another computer system 36, for example, an authentication computer system, and stored in a buffer therein. While capturing image data, the computing device 10 identifies biometric characteristics of the face included in the captured image data and calculates relationships between the characteristics. Such relationships may include the distance between characteristics. For example, the distance between the tip of the nose and a center point between the eyes, or the distance between the tip of the nose and the center of the chin. The relationships between the facial characteristics distort as the computing device 10 is moved closer to the face of the user 40. Thus, when the computing device 10 is positioned closer to the face of the user 40 the captured facial image data is distorted more than when the computing device 10 is positioned further from the user 40, say at arms-length. Authentication computer system, the authentication computer system may also identify the biometric characteristics, calculate relationships between the characteristics, and detect liveness based on, for example, distortions of the captured facial image data

Figure 7 is an enlarged front view of the computing device 10 as shown in Figure 6; however, the facial image 42 and visual aid 44 are larger. The displayed facial image 42 is somewhat distorted as evidenced by the larger nose which occupies a proportionally larger part of the image 42 while the ear indicia 46 are narrower and thus occupy a smaller part of the image 42. The facial image 42 also touches the top and bottom of the perimeter of the display 26.

Face detector applications may not be able to properly detect a face in captured image data if the entire face is not included in the image data. Moreover, image data of the entire face is required for generating trustworthy and accurate liveness detection results. Thus, the displayed facial image 42 as shown in Figure 7 typically represents the maximum size of the facial image 42 for which image data can be captured and used to generate trustworthy and accurate liveness detection results. The position of the computing device 10 corresponding to the facial image 42 displayed in Figure 7 is referred to herein as the maximum size position. In view of the above, it should be understood that facial image data captured when the displayed facial image 42 extends beyond the perimeter of the display 26 typically is not used for liveness detection. However, facial image data captured when a small percentage of the displayed facial image 42 extends beyond the perimeter of the display 26 may be used for liveness detection. A small percentage may be between around one and two percent.

Figure 8 is an enlarged front view of the computing device 10 displaying the visual aid 44 as shown in Figure 7. However, the entire face of the user is not displayed and those portions of the face that are displayed are substantially distorted. The facial image 42 was captured when the computing device 10 was very close to the face of the user, perhaps within a few inches. Facial image data captured when the facial image is as shown in Figure 8 is not used for liveness detection because the entire face of the user is not displayed.

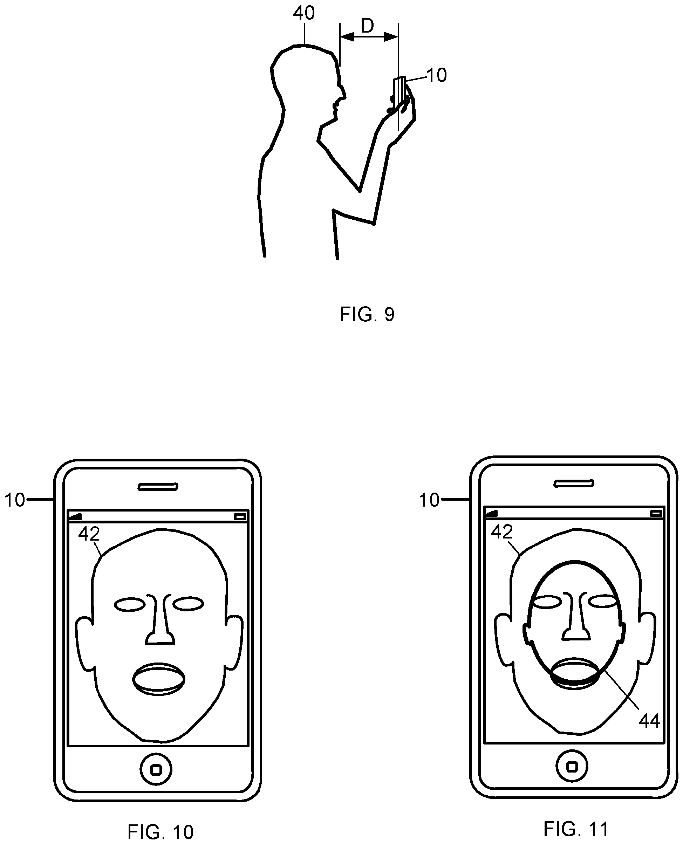

Figure 9 is a side view of the user 40 operating the computing device 10 in which the computing device 10 is in a second example initial position which is closer to the face of the user 40 than the first initial position.

Figure 10 is an enlarged front view of the computing device 10 displaying the facial image 42 when the computing device 10 is in the second example initial position. The second example initial position is in or around the maximum size position.

Figure 11 is an enlarged front view of the computing device 10 displaying the facial image 42 and the example visual aid 44. However, the visual aid 44 has a different size than that shown in Figure 4. That is, the visual aid 44 is smaller than the visual aid 44 shown in Figure 4. Thus, it should be understood that the visual aid 44 may be displayed in a first size and a second size where the first size is larger than the second size. It should be understood that the visual aid 44 may have a different shape in addition to being smaller.

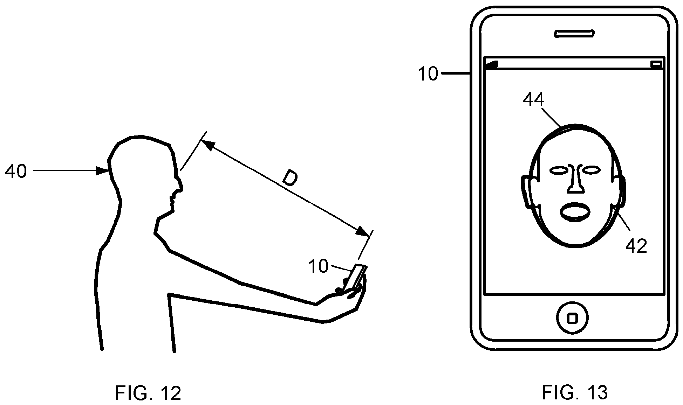

Figure 12 is a side view of the user 40 operating the computing device 10 in a second example terminal position after the computing device 10 has been moved away from the user. The computing device 10 is moved from the second initial position to the second terminal position in response to displaying the differently sized visual aid 44.

Figure 13 is an enlarged front view of the computing device 10 in the second example terminal position displaying the facial image 42 approximately aligned with the differently sized visual aid 44. Facial image data captured while moving the computing device 10 from the second initial position to the second terminal position may also be temporarily stored in a buffer in the computing device 10 and used for detecting liveness.

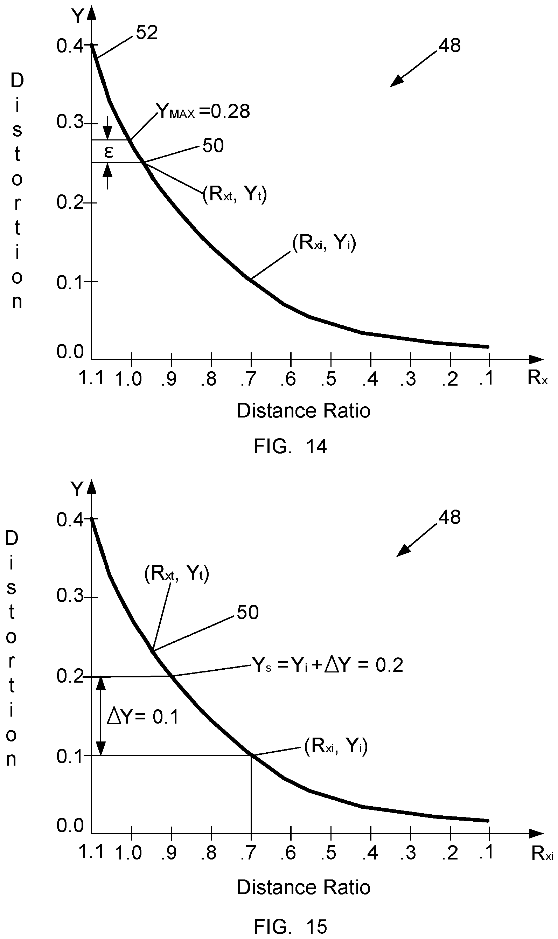

Figure 14 is an example curve 48 illustrating the rate of change in the distortion of biometric characteristics included in captured facial image data. The Y-axis corresponds to a plane parallel to the face of the user 40 and facilitates measuring the distortion, Y, of captured facial image data in one-tenth increments. The X-axis measures the relationship between the face of the user 40 and the computing device 10 in terms of a distance ratio Rx.

The distance ratio Rₓ is a measurement that is inversely proportional to the distance D between the computing device 10 and the face of the user 40. The distance ratio Rₓ may be calculated as the width of the head of the user 40 divided by the width of an image data frame at various distances D from the user 40. Alternatively, the distance ratio Rₓ may be calculated in any manner that reflects the distance between the face of the user 40 and the computing device 10. At the origin, the distance ratio Rₓ is 1.1 and decreases in the positive X direction in one-tenth increments. Thus, as the distance ratio Rₓ increases the distortion of captured facial image data increases and as the distance ratio Rₓ decreases the distortion of captured facial image data decreases.

Y_{MAX} occurs on the curve 48 at a point which represents the maximum distortion value for which captured image data may be used for detecting liveness, and corresponds to the distance ratio Rₓ = 1.0 which typically corresponds to the maximum size position as shown in Figure 7. The example maximum distortion value is 0.28. However, it should be understood that the maximum distortion value Y_{MAX} varies with the computing device 10 used to capture the facial image data because the components that make up the camera 22 in each different computing device 10 are slightly different. As a result, images captured by different devices 10 have different levels of distortion and thus different maximum distortion values Y_{MAX}.

The point (Rₓₜ, Yₜ) on the curve 48 represents a terminal position of the computing device 10, for example, the first terminal position. Yₜ is the distortion value of facial image data captured in the terminal position. The distortion value Yₜ should not equal Y_{MAX} because a user may inadvertently move the computing device 10 beyond Y_{MAX} during capture which will likely result in capturing faulty image data. As a result, a tolerance value ε is used to enhance the likelihood that Ytdoes not equal Y_{MAX} and that as a result quality image data only is captured. Quality image data may be used to enhance the accuracy and trustworthiness of liveness detection results and of authentication transaction results.

The tolerance value ε is subtracted from Y_{MAX} to define a threshold distortion value 50. Captured facial image data having a distortion value less than or equal to the threshold distortion value 50 is considered quality image data, while captured facial image data with a distortion value greater than the threshold distortion value 50 is not. The tolerance value ε may be any value that facilitates capturing quality image data, for example, any value between about 0.01 and 0.05.

The point (Rₓᵢ, Yᵢ) on the curve 48 represents an initial position of the computing device 10, for example, the first initial position. Yᵢ is the distortion value of facial image data captured in the initial position. The distortion values Yᵢ and Yₜ are both less than the threshold distortion value 50, so the image data captured while the computing device was in the initial and terminal positions is considered to be quality image data. Because the image data captured in the initial and terminal positions is considered quality image data, all facial image data captured between the initial and terminal positions is also considered to be quality image data.

Point 52 on the curve 48 represents the distortion value of facial image data captured when the computing device 10 is perhaps a few inches from the face of the user 40 as illustrated in Figure 8. The distortion value at point 52 is greater than the threshold distortion value 50 so image data captured while the computing device 10 is a few inches from the face of the user 40 typically is not considered to be quality image data.

The distortion of captured image data may be calculated in any manner. For example, the distortion may be estimated based on the interalar and bizygomatic widths where the interalar width is the maximum width of the base of the nose. More specifically, a ratio Ro between the interalar and bizygomatic widths of a user may be calculated that corresponds to zero distortion which occurs at Y = 0.0. Zero distortion occurs at a theoretical distance D of infinity. However, as described herein zero distortion is approximated to occur at a distance D of about five feet.

The ratios R₀ and Rₓ may be used to estimate the distortion in image data captured at various distances D. The distortion at various distances D may be estimated as the difference between the ratios, Rₓ-R₀, divided by Ro, that is (Rₓ-R₀)/R₀. Alternatively, any other ratios may be used. For example, ratios may be calculated between the height of the head and the height of the nose, where the height of the head corresponds to the bizygomatic width. Additionally, it should be understood that any other type of calculation different than ratios may be used to estimate the distortion in image data. For the curve 48, capture of facial image data may start at about two feet from the user 40 and end at the face of the user 40.

For the example methods and systems described herein, trustworthy and accurate user liveness detection results may be calculated as a result of analyzing quality facial image data captured during a 0.1 change ΔY in distortion. Analyzing facial image data captured during a 0.1 change ΔY in distortion typically enables analyzing less image data which facilitates reducing the time required for conducting user liveness detection and thus enhances user convenience.

Figure 15 is the example curve 48 as shown in Figure 14 further including a 0.1 change ΔY in distortion between the limits of Y = 0.1 and Y = 0.2. The change in distortion may be used to determine whether to display the large or small visual aid 44. The distortion value Yᵢ and the 0.1 change ΔY in distortion may be summed, i.e., Yᵢ + ΔY, to yield a distortion score Ys. The distortion value Yᵢ is 0.1 so the distortion score Yₛ is 0.2. When the distortion score Yₛ is less than or equal to the threshold distortion score 50, the large visual aid 44 is displayed and all image data captured by the computing device 10 while moving from the initial position into the terminal position is considered quality image data.

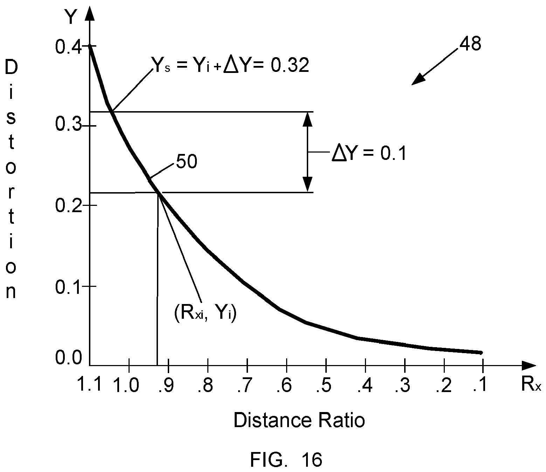

Figure 16 is the example curve 48 as shown in Figure 15; however, the initial position of the computing device 10 is different and results in a distortion score Ys that exceeds the threshold distortion value 50. Because the distortion score Ys exceeds the threshold distortion value 50, the 0.1 change ΔY in distortion value is subtracted from the initial distortion value Yᵢ= 0.22. As a result, the small visual aid 44 is displayed. Displaying the small visual aid 44 encourages moving the computing device 10 away from the face of the user 40.

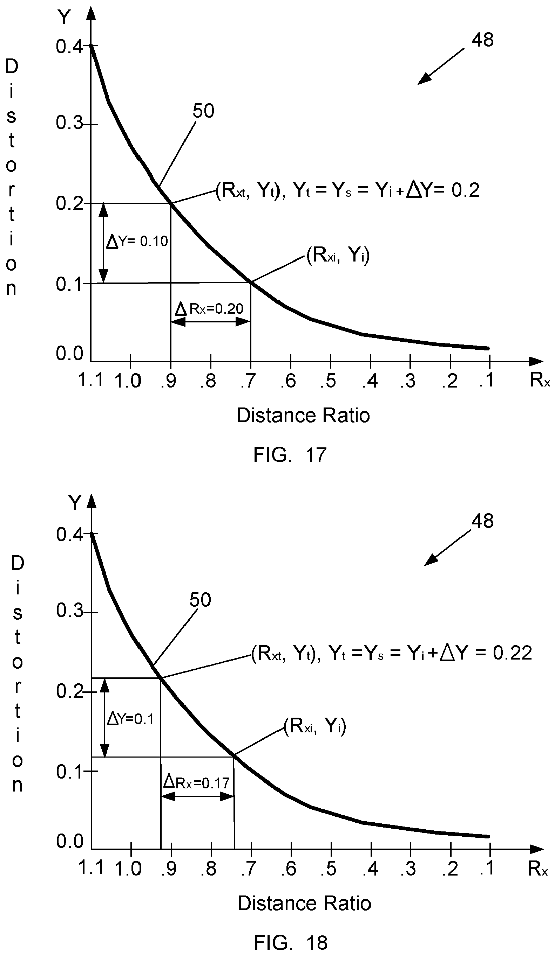

Figure 17 is the example curve 48 as shown in Figure 15; however, the terminal position is not coincident with the position of the threshold distortion value 50. Rather, the terminal position corresponds to the distortion score of Ys = 0.2 which corresponds to the distance ratio Rₓ = 0.9. The initial position corresponds to the distortion value Yᵢ = 0.1 which corresponds to the distance ratio Rₓ = 0.7. Thus, the distance ratios are calculated as 0.9 and 0.7 which have a difference of 0.20. The 0.1 change ΔY in distortion also occurs between the limits of Y = 0.1 and Y = 0.2. The distortion score Yₛ is 0.2 which is less than the threshold distortion value 50 so image data captured between the initial and terminal positions is considered quality image data.

Moving the computing device 10 between the distance ratios Rₓ = 0.7 and Rₓ = 0.9 enhances user convenience because the user is required to move the device 10 less while capturing image data. Moreover, less image data is typically captured which means it typically takes less time to process the data when detecting liveness which also enhances user convenience.

To facilitate capturing image data between the initial position at Rₓ = 0.7 and the terminal position at Rₓ = 0.9 only, a custom sized visual aid 44 may be displayed. When the distortion score Yₛ is less than or equal to the threshold distortion value 50, the size of the visual aid 44 is customized to have a width based on the greatest calculated distance ratio Rₓ which occurs in the terminal position. More specifically, because the distance ratio is calculated as the bizygomatic width divided by the width of an image data frame, the width of the custom visual aid at the terminal position can be calculated as the frame width multiplied by the greatest calculated distance ratio Rₓ = 0.90.

It should be understood that the 0.1 change ΔY in distortion may be positioned to occur anywhere along the Y-axis and that each position will have a different upper and lower limit. Because quality image data need be captured only during the 0.1 change ΔY in distortion, the upper and lower limits may be used to reduce or minimize the movement required to capture quality image data. More specifically, the 0.1 change ΔY in distortion may be positioned such that the limits reduce or minimize the difference between the distance ratios Rₓ in the initial and terminal positions.

Figure 18 is the example curve 48 as shown in Figure 17; however, the 0.1 change ΔY in distortion occurs between the limits of Y= 0.12 and Y= 0.22. The corresponding distance ratios are Rₓ = 0.75 and Rₓ = 0.92. The difference between the distance ratios is 0.17. The 0.17 difference is 0.03 less than the 0.20 difference described herein with respect to Figure 17 which means the computing device 10 is moved through a shorter distance to capture quality image data. Moving the computing device through smaller differences in the distance ratio is preferred because less movement of the computing device 10 is required to capture quality image data, which enhances user convenience.

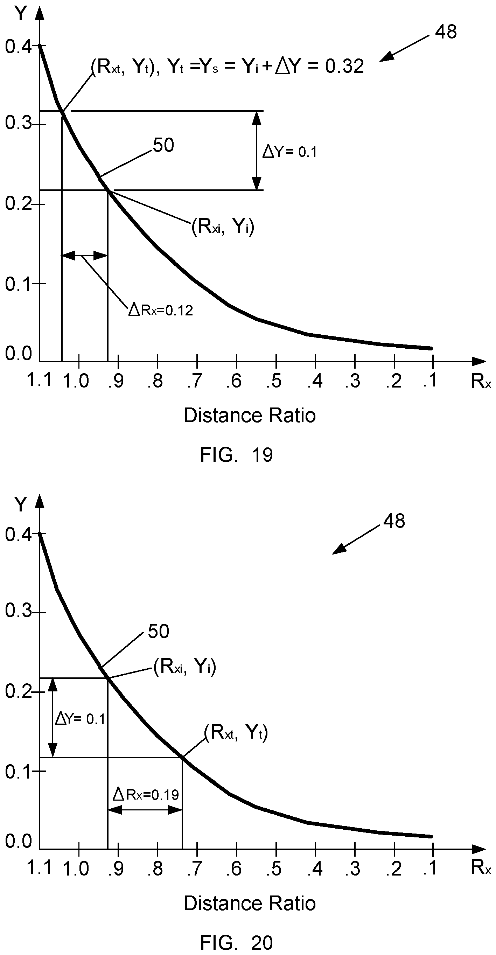

Figure 19 is the example curve 48 as shown in Figure 18; however, the 0.1 change ΔY in distortion occurs between the limits of Y = 0.22 and Y = 0.32. The distortion score Yₛ is 0.32 which is greater than the threshold distortion value 50, so image data captured for the 0.1 change ΔY in distortion between Y = 0.22 and Y = 0.32 is not considered quality image data. As a result, the 0.1 change ΔY in distortion is subtracted from the distortion Yᵢ and the width of the custom visual aid is calculated accordingly.

Figure 20 is the example curve 48 as shown in Figure 19; however, the 0.1 change ΔY in distortion is subtracted from the distortion Yᵢ such that the 0.1 change ΔY in distortion occurs between the limits of Y = 0.12 and Y = 0.22. The distortion values of Y = 0.22 and Y = 0.12 correspond to the distance ratios of Rₓ = 0.92 and Rₓ = 0.73. Thus, the calculated distance ratios are 0.92 and 0.73. When the 0.1 change ΔY in distortion is subtracted from the distortion value Yᵢ, the smallest calculated distance ratio is used to calculate the width of the custom visual aid. That is, the distance score of 0.73 is multiplied by the image data frame width to yield the width of the custom visual aid.

Imposters have been known to use two-dimensional photographs of users during cyber-attacks. However, the facial characteristic distortions caused by moving a two-dimensional photograph towards and away from the computing device 10 are typically insignificant or are different than those that occur in facial image data captured of a live person. Thus, distortions in captured facial image data may be used as the basis for detecting user liveness.

After repeatedly capturing facial image data as a result of moving the computing device 10 between the same initial position and the same terminal position, users may become habituated to the movement so may try placing the computing device 10 in an initial position that is in or around the terminal position in an effort to reduce the time required for detecting liveness. However, doing so typically does not allow for detecting a 0.1 change ΔY in distortion because many times the distortion score Yₛ exceeds the threshold distortion value 50. Consequently, doing so usually results in displaying the small visual aid 44.

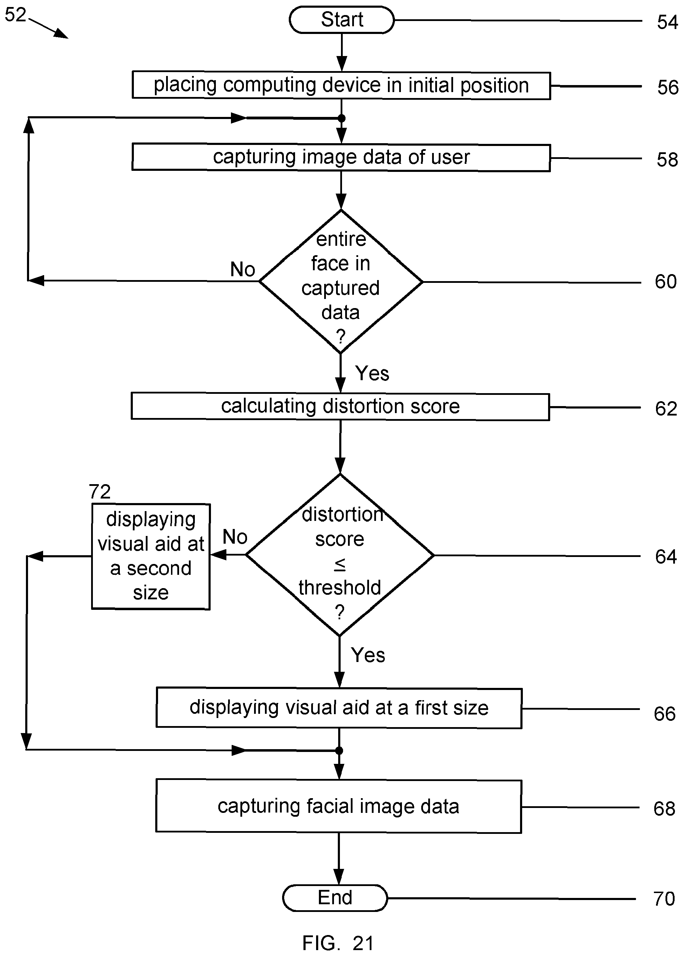

Figure 21 is a flowchart 52 illustrating an example method of displaying a visual aid. The method starts 54 by placing 56 the computing device 10 in an initial position at a distance D from the face of the user 40, capturing 58 facial image data of the user 40, and analyzing the captured facial image data. More specifically, the facial image data is analyzed to determine 60 whether or not the entire face of the user 40 is present in the captured facial image data. If the entire face is not present 60, processing continues by capturing 58 facial image data of the user 40. However, if the entire face is present 60, processing continues by calculating 62 a distortion score Yₛ and comparing the distortion score Yₛ against the threshold distortion value 50. If the distortion score Yₛ is less than or equal to the threshold distortion value 50, the computing device 10 continues by displaying 66 the visual aid 44 at a first size and capturing 68 facial image data of the user 40 while being moved from the initial to the terminal position. Next, processing ends 70. However, if the distortion score Yₛ exceeds the threshold distortion value 50, the computing device 10 continues by displaying 72 the visual aid 44 at a second size and capturing 68 facial image data of the user while being moved from the initial to the terminal position. Next, processing ends 70.

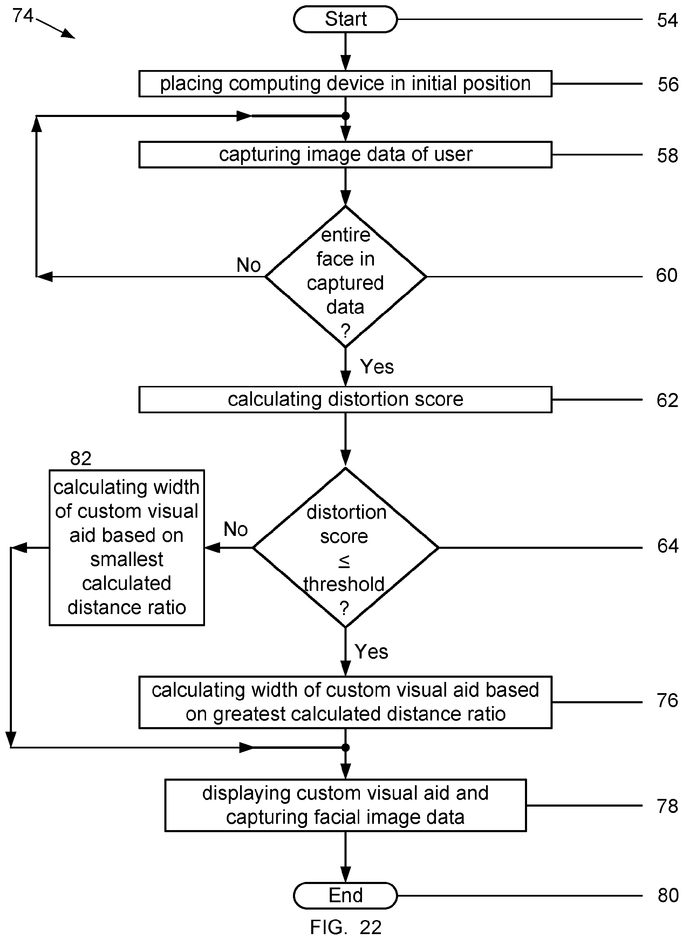

Figure 22 is a flowchart 74 illustrating another example method of displaying a visual aid. This alternative example method is similar to that described herein with regard to Figure 21; however, after determining 64 whether or not the distortion score Yₛ exceeds the threshold distortion value 50 the computing device displays a custom visual aid. More specifically, when the distortion score Yₛ is calculated and is less than or equal to the threshold distortion value 50, the computing device 10 continues by calculating 76 the distance ratios that correspond to the limits of the 0.1 change ΔY in distortion, calculating the width of the custom visual aid based on the greatest calculated distance ratio, and displaying 78 the custom visual aid with the calculated width while capturing 78 facial image data. Next, processing ends 80.

However, when the distortion score Yₛ exceeds the threshold distortion value 50, the computing device 10 continues by subtracting the 0.1 change ΔY in distortion from the distortion value Ys, calculating the distance ratios corresponding to the limits of the 0.1 change ΔY in distortion, calculating 82 the width of the custom visual aid based on the smallest calculated distance ratio, and displaying 78 the custom visual aid with the calculated width while capturing 78 facial image data. Next, processing ends 80.

The example methods described herein may be conducted entirely by the computing device 10, or partly on the computing device 10 and partly on other computing devices 38 and computer systems 36 operable to communicate with the computing device 10 over the network 34. Moreover, the example methods described herein may be conducted entirely on the other computer systems 36 and other computing devices 38. Thus, the example methods may be conducted on any combination of computers, computer systems 36, and computing devices 38. Furthermore, data described herein as being stored in the memory 14 may alternatively be stored in any computer system 36 or computing device 38 operable to communicate with the computing device 10 over the network 34. Additionally, the example methods described herein may be implemented with any number and organization of computer program components. Thus, the methods described herein are not limited to specific computer-executable instructions. Alternative example methods may include different computer-executable instructions or components having more or less functionality than described herein.

In example embodiments, the above-described methods and systems for displaying a visual aid enhance the accuracy and trustworthiness of user liveness detection results as well as verification transaction results. More specifically, in one example embodiment, after determining the entire face of a user is in captured image data, a computing device continues by calculating a distortion score and comparing the calculated distortion score against a threshold distortion value. If the distortion score is less than or equal to the threshold distortion value, the computing device continues by displaying a visual aid at a first size and capturing facial image data of the user while being moved from an initial position to a terminal position. However, if the distortion score exceeds the threshold distortion value, the computing device continues by displaying the visual aid at a second size and capturing facial image data of the user while being moved from the initial to the terminal position.

In another example embodiment, after determining whether or not the distortion score exceeds the threshold distortion value the computing device displays a custom visual aid. When the distortion score is calculated and is less than or equal to the threshold distortion value, the computing device continues by calculating the distance ratios that correspond to the limits of the 0.1 change ΔY in distortion, calculating the width of the custom visual aid based on the greatest calculated distance ratio, and displaying the custom visual aid with the calculated width while capturing facial image data. However, when the distortion score exceeds the threshold distortion value, the computing device continues by subtracting the 0.1 change ΔY in distortion from the distortion value, calculating the distance ratios corresponding to the limits of the 0.1 change ΔY in distortion, calculating the width of the custom visual aid based on the smallest calculated distance ratio, and displaying the custom visual aid with the calculated width while capturing facial image data.

As a result, in each example embodiment, image data is captured quickly and conveniently from users which may be used to facilitate enhancing detection of spoofing attempts, accuracy and trustworthiness of user liveness detection results and of verification transaction results, and reducing time wasted and costs incurred due to successful spoofing and faulty verification transaction results. Additionally, user convenience for capturing image data with computing devices is enhanced.

The example methods and systems for displaying a visual aid described above should not be considered to imply a fixed order for performing the method steps. Rather, the method steps may be performed in any order that is practicable, including simultaneous performance of at least some steps. Moreover, the method steps may be performed in real time or in near real time. It should be understood that, for any process described herein, there can be additional, fewer, or alternative steps performed in similar or alternative orders, or in parallel, within the scope of the various embodiments, unless otherwise stated. Furthermore, the invention is not limited to the embodiments of the methods described above in detail. Rather, other variations of the methods may be utilized within the scope of the claims.

## Claims

1. A method for displaying a visual aid on a display of a computing device, the method comprising the steps of:
calculating a distortion score based on an initial position of the computing device;
comparing, by the computing device, the distortion score against a threshold distortion value; and
when the distortion score is less than or equal to the threshold distortion value displaying a visual aid having a first size and when the distortion score exceeds the threshold distortion value displaying the visual aid at a second size.

2. A method for displaying a visual aid in accordance with claim 1 further comprising the step of capturing image data of a biometric modality of the user while one of the first and second sized visual aids is displayed.

3. A method for displaying a visual aid in accordance with claim 1 or 2 further comprising the step of using limits of distortion to minimize movement of the computing device required to capture quality image data.

4. A method for displaying a visual aid in accordance with claim 3 wherein the step of using limits comprises:
establishing limits for a change in distortion;
calculating a distance ratio for each limit;
calculating, by the computing device, a width of a visual aid based on the greatest calculated distance ratio; and
displaying the visual aid.

5. The method for displaying a visual aid in accordance with claim 4 wherein when the distortion score is less than or equal to the threshold distortion value, conducting said calculating a distance ratio step.

6. A computing device for displaying a visual aid comprising:
a processor; and
a memory configured to store data, said computing device being associated with a network and said memory being in communication with said processor and having instructions stored thereon which, when read and executed by said processor, cause said computing device to:
calculate a distortion score based on an initial position of said computing device;
compare the distortion score against a threshold distortion value; and
when the distortion score is less than or equal to the threshold distortion value, display a visual aid having a first size and when the distortion score exceeds the threshold distortion value display the visual aid at a second size.

7. A computing device for displaying a visual aid in accordance with claim 6, wherein the instructions, when read and executed by said processor, cause said computing device to capture image data of a biometric modality of the user while either the first or second sized visual aid is displayed.

8. A computing device for displaying a visual aid in accordance with claim 6 or 7, wherein the instructions, when read and executed by said processor, cause said computing device to use limits of distortion to minimize movement of said computing device required to capture quality image data.

9. A method for displaying a visual aid comprising the steps of:
establishing limits for a change in image data distortion;
calculating a distance ratio for each limit;
calculating, by a computing device, a width of a visual aid based on the greatest calculated distance ratio; and
displaying the visual aid.

10. A method for displaying a visual aid in accordance with claim 9 further comprising the steps of:
calculating a distortion score;
comparing the distortion score against a threshold distortion value; and
when the distortion score is less than or equal to the threshold distortion value, conducting said calculating a distance ratio step.

11. A method for displaying a visual aid in accordance with claim 9 or 10 further comprising the step of using limits of distortion to minimize movement of the computing device required to capture quality image data.
